# EUROPEAN PATENT SPECIFICATION

(11) **EP 0 413 478 B1**
(45) Date of publication and mention of the grant of the patent: **20.04.1994**
(21) Application number: 90308508.2
(22) Date of filing: 02.08.1990
(51) Int. Cl.: B60K 28/16

(54) **Adaptive vehicle traction control system**
Anpassendes Fahrzeug-Traktionssteuerungssystem
Système de commande adaptif de propulsion de véhicule

(30) Priority: 14.08.1989 US 393181
(43) Date of publication of application: 20.02.1991
(73) Proprietor: GENERAL MOTORS CORPORATION, Detroit Michigan 48202 (US)
(72) Inventor: Kabasin, Daniel Francis, Rochester, New York 14626 (US)
(74) Representative: Denton, Michael John

(56) References cited:
- DE-A- 3 603 765
- DE-A- 3 603 765
- DE-A- 3 818 980
- PATENT ABSTRACTS OF JAPAN vol. 09, no. 249 (M-419)5 October 1985

## Description

This invention relates to a vehicle traction control apparatus and method and more particularly to such a method and apparatus which is adaptive to the road surface coefficient of friction to limit the drive wheel torque input in the event of excess wheel spin.

It is a common experience with automotive vehicles for excess wheel spin to occur during vehicle acceleration when the operator initiated engine output torque delivered to the driven wheels are such that the frictional forces between the tyre and the road are overcome. While a small amount of spin between the tyre and the road surface is necessary in order to achieve a driving force, excessive spin results in the reduction of effective driving force and the lateral stability of the vehicle.

Systems have been proposed to limit the torque input to the driven wheels for traction control. Typically, these systems limit spin when the spin value reaches a predetermined condition by controlling the wheel driving torque independent of the road surface condition. However, a reaction to a wheel spinning condition may enhance stability and/or operator comfort when accelerating on one road surface condition but not when accelerating on another road surface condition. A prior arrangement is shown in US patent nos. 4,721,176 and 4,682,667. An arrangement in accordance with the preamble of Claims 1 and 5 is disclosed in DE-A-3603765.

Consequently, it would be desirable to provide a traction control system that would tailor the control of the torque applied to the driven wheels to the particular road surface condition so as to enhance stability of the vehicle and provide a satisfactory performance over all road surface conditions.

To this end, a traction control method and apparatus in accordance with the present invention are characterised by the features specified in the characterising portions of claims 1 and 5 respectively.

This invention provides for limiting wheel spin on a road surface during vehicle acceleration to maintain vehicle stability and assure operator comfort over all road surface conditions by adapting the control of the driving torque applied to the driven wheels to a characteristic of the road surface.

In accordance with this invention, the rate of reduction of the torque input to the driven wheels in response to an excessive spin condition is varied as a function of the road surface coefficient of friction. Specifically, the rate is in inverse proportion to the coefficient of friction of the road surface. Additionally, the rate of torque reduction may also be a function of the magnitude of wheel spin. In a specific form of the invention, the control of the driving torque to the driven wheels is established through control of the area of the air intake of the engine.

To further establish the adaptive aspects of this invention, the driving torque following recovery from an excessive spin condition is increased at a rate that is in inverse proportion to the road surface coefficient of friction.

In another specific aspect of the invention, the rate of increase in driven wheel spin is determined as a measure of the road surface coefficient of friction.

Therefore, the traction control apparatus and method of the present invention allows for the tailoring of the system to the road surface over which the motor vehicle is traveling.

The present invention will now be described, by way of example, with reference to the following description of a preferred embodiment, and the accompanying drawings, in which:-
Figure 1 is a general diagram of an engine and control unit for limiting the driven wheel spin in accordance with the principles of this invention;
Figure 2 is a schematic of a mechanism for positioning and limiting the throttle position in the engine throttle bore; and
Figure 3 is a diagram illustrating the operation of the arrangement of Figure 1 in limiting wheel slip.

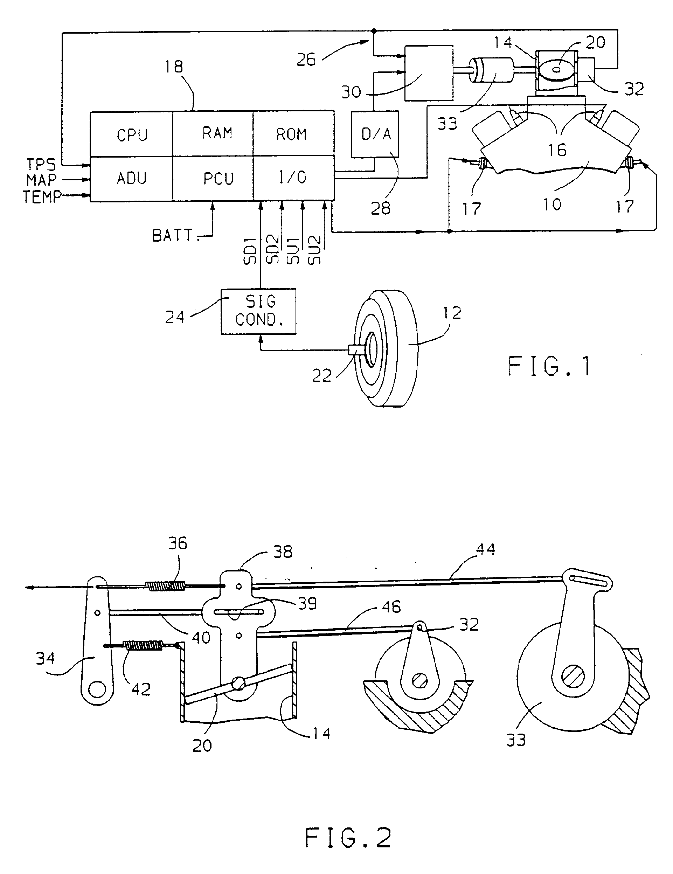

Referring to Figure 1, there is illustrated an internal combustion engine 10 for a motor vehicle that operates to apply a driving torque via the conventional vehicle drive train to the vehicle driven wheels, such as the wheel 12. Air is drawn into the engine intake manifold through a throttle bore 14 and mixed with fuel injected into the engine intake manifold by (electromagnetic) fuel injectors 16. The air and fuel mixture in turn is drawn into the cylinders of the engine 10 where it is ignited by respective spark plugs 17 and undergoes combustion, thereby generating torque applied to the driven wheels.

The fuel injectors 16 are controlled by a (digital) control unit 18 in response to measured values of engine parameters including the manifold absolute pressure MAP provided by a conventional pressure sensor, engine coolant temperature TEMP provided by a conventional temperature sensor and engine speed to establish a predetermined air/fuel ratio, such as the stoichiometric ratio. The spark plugs 17 are controlled in response to parameters such as manifold absolute pressure and engine temperature to establish a desired ignition timing at a scheduled advance angle before cylinder top dead centre.

Air flow into the engine 10 is controlled by a conventional throttle blade 20 in the throttle bore 14 that is positioned by the vehicle operator for controlling the operation of the engine 10. As will be described, the position of the throttle blade 20 is limited so as to prevent the torque applied to the wheels 12 by the engine 10 from becoming excessive thereby causing the wheels 12 to experience excessive spin.

In order to provide for traction control, the speed of the driven and undriven wheels are provided to the control unit 18. These signals are in the form of squarewave signals SD1 and SD2 (for the driven wheels) and SU1 and SU2 (for the undriven wheels) having a frequency directly proportional to wheel speed. The wheel speed sensors may take the form of an electromagnetic pickup 22 sensing the passing of teeth rotating with the wheel 12. The resulting alternating signal having a signal proportional to the speed of the wheel 12 is provided to a signal conditioner 24 which provides the squarewave signal SD1 representing the speed of the (driven) wheel 12. The remaining wheel speed signals are provided in similar manner in response to rotation of the remaining three wheels of the motor vehicle. The power output of the engine 10 is limited by the control unit 18 for traction control by establishing a limit position of the throttle blade 20 corresponding to a commanded throttle area established in accordance with the principles of this invention. The throttle position limit is established by means of a closed loop control circuit 26. The control unit 18 provides a digital signal to a digital-to-analogue converter (D/A) 28 representing a commanded limit position of the throttle blade 20. The analoque signal output of the digital-to-analoque converter 28 representing the limit position is provided to a drive circuit 30 in the closed loop control circuit 22. The drive circuit 30 also receives a signal representing the actual position TPS of the throttle blade 20 from a potentiometer 32 driven by the shaft of the throttle blade 20.

The drive circuit 30 is a conventional proportional plus integral circuit responding to the difference between the commanded limit position of the throttle blade 20 from the digital-to-analoque converter 28 and the actual position provided by the potentiometer 32. The sum of the integral and proportional terms from the drive circuit 30 are provided to a torque motor 33 which drives the throttle blade 20 to a position in accordance with the limit position from the digital-to-analoque converter 28.

The control unit 18 takes the form of a digital computer that is standard in form and includes a central processing unit (CPU) which executes an operating program permanently stored in a read-only memory (ROM) which also stores tables and constants utilized in controlling the fuel injected by the fuel injectors 16, in controlling the spark timing signals to the spark plugs 17 and in positioning the throttle blade 20 for limiting engine power to control wheel spin. Contained within the CPU are conventional counters, registers, accumulators, flag flip flops, etc. along with a clock which provides a high frequency clock signal.

The digital computer also includes a random access memory (RAM) into which data may be temporarily stored and from which data may be read at various address locations determined in accordance with the program stored in the ROM. A power control unit (PCU) receives battery voltage and provides regulated power to the various operating circuits in the control unit 18.

The control unit 18 further includes an input/output (I/O) circuit comprised of an input section for receiving the squarewave speed signals representing the speed of the four vehicle wheels 12 and an output section that provides the digital signal to the digital-to-analoque converter 28 representing a commanded limit position of the throttle blade 20, provides a timed injection pulse to the fuel injector 16 and provides timed signals to the spark plugs 17 to ignite the mixture in the individual cylinders. The input/output circuit may also receive an output from a conventional vehicle ignition distributor or other well known engine position transducers providing a signal in the form of a pulse with each intake event. These pulses are utilized by the control unit 18 for initiating the injection pulses to the fuel injectors 16 and the spark signals to the spark plugs 17.

The input/output circuit also includes an input counter section which receives the pulse output of the signal conditioners such as the signal conditioners 24 representing the speed of the four vehicle wheels 12. The wheel speeds are then determined such as by counting clock pulses between wheel speed pulses. Alternatively, a separate counter may be utilized for receiving and processing the wheel speed inputs so as to establish the four wheel speeds. These speeds will then be available to the control unit 18 for traction control as will be described.

The control unit 18 further includes an analoque-to-digital unit (ADU) which provides for measurement of the analoque signals including the manifold absolute pressure (MAP), engine temperature (TEMP) and throttle position (TPS). These signals are sampled and converted under control of the CPU and stored in ROM designated RAM memory locations.

The apparatus for controlling the position of the throttle blade 20 in the throttle bore 14 in response to the vehicle operator input and for limiting the position of the throttle blade 20 to limit wheel spin is illustrated in FIGURE 2. In general, the throttle blade 20 is positioned by the operation of the conventional vehicle accelerator pedal by the vehicle operator by means of a lever 34 coupled to a spring 36 through a throttle arm 38. The lever 34 is also coupled to the throttle arm 38 via a rod 40 secured at one end to the lever 34 and having its opposite end bent so as to extend through a slot 39 in the throttle arm 38 thereby forming a lost motion connection.

The spring 36 normally biases the lever 34 and the throttle arm 38 toward one another such that the end of the rod 40 extending through the slot 39 engages the extreme end of the slot 39. With this arrangement, a spring 42 biases the throttle lever 38 in direction to close the throttle blade 20 via the lever 34 and the rod 40 bearing against the end of the slot 39 in the throttle arm 38.

In operation, as the lever 34 and rod 40 are moved by operation of the vehicle accelerator pedal, the throttle arm 38 is moved therewith via the bias of the spring 36 to open the throttle blade 20. Upon release of the throttle by the vehicle operator, the throttle blade 20 is returned to the closed position via the spring 42.

In order to limit the throttle position for traction control, the torque motor 33 previously described is coupled to the throttle arm 38 via a rod 44. Under control of the control unit 18 via the closed loop control circuit 26, the torque motor 33 may be energized to generate a torque tending to rotate its output shaft in a clockwise direction as viewed in the drawing against the force of the spring 36 to limit the throttle position. Within the limits established by the slot 39, the throttle blade 20 may be positioned independent of the position of the lever 34 established by the vehicle operator to limit the power output of the engine 10 applied to the wheel 12 to limit wheel spin.

The throttle position sensor provide by potentiometer 32 previously described is positioned by means of a linkage 46 to provide the signal TPS representative of the position of the throttle blade in the throttle bore 14.

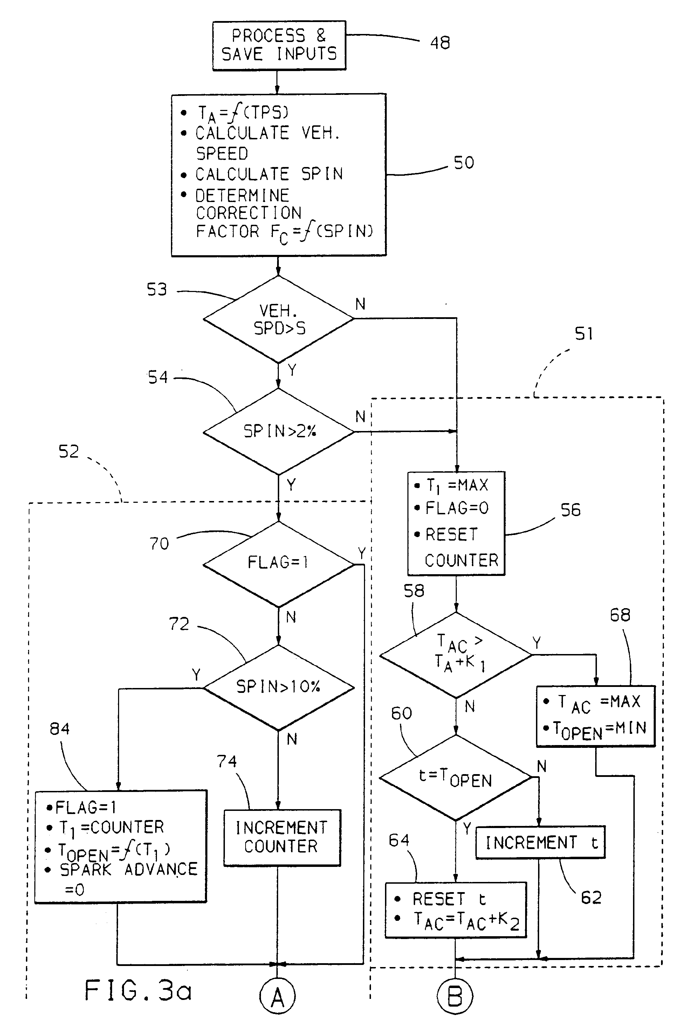

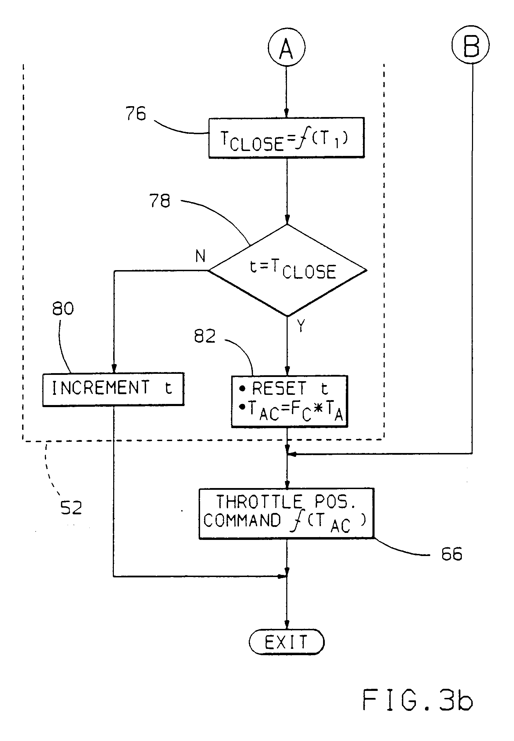

The routine for limiting wheel slip in accordance with this invention is illustrated in Figure 3. The ROM contains the instructions necessary to increment the algorithm as diagrammed in Figure 3. It should be noted that in describing the functions of the algorithm encoded in the ROM, references to tasks which have been detailed as flow diagram function blocks will be designated by nn , where nn is the diagram reference number and indicates that the concept described by the particular flow diagram function block text is being referenced. The text in the flow diagram blocks is intended to describe the general task or process being executed by the control unit 18 at that point, the text does not represent the actual ROM instructions. It is recognized that there are a variety of known information processing languages available to one skilled in the art to construct the actual instructions necessary to accomplish the task described by the text in the flow diagram function blocks.

The routine for traction control is executed at predetermined interrupt intervals such as 10 milliseconds as established by the CPU. When the interrupt is initiated, the program first processes and saves the various inputs thereto including the manifold absolute pressure, engine temperature and throttle position supplied to the ADU of the control unit 18 and the four-wheel speed signals provided to the I/O 48.

A number of parameters are then determined based on the measured parameters 50. These include (A) the actual throttle area T_{A} obtained from a lookup table as a function of the throttle position, (B) vehicle speed such as from the average of the undriven wheel speeds SU1 and SU2, (C) wheel spin such as from the expression (Sd - Su)/Su where Sd is the speed of the fastest driven wheel and Su is the average speed of the two undriven wheels and (D) a correction factor F_{C} obtained such as from a lookup table storing values of the correction factor F_{C} as a predetermined function of the determined value of wheel spin. The correction factor F_{C} is an engine torque reduction multiplier less than unity used as will be explained as one factor establishing the rate of reduction of engine output torque in response to slip exceeding a low threshold. In general, the stored values of the correction factor establish an inverse functional relationship between F_{C} and wheel spin, that is, the retrieved value of F_{C} decreases from unity as wheel spin increases.

The routine next determines whether to execute a throttle limit opening routine 51 or a throttle limit closing routine 52. The throttle limit opening routine 51 is executed if either the vehicle speed is equal to or less than a calibration value S which may be zero or some small value 53 or if wheel spin is equal to or less than a low threshold such as 2% 54. A spinning condition is ignored via the vehicle speed criteria and the throttle limit opening routine 51 is executed to enable a vehicle operator to free the motor vehicle from a stuck condition.

Assuming the throttle limit opening conditions are met 53,54, various parameters are initialized 56 that are used primarily in the throttle limit closing routine 52. This step includes setting a count T₁ to an initial maximum value, resetting a flag indicating the status of the identification of the road surface coefficient of friction as represented by the rate of change in wheel slip and resetting a counter used in determining the road coefficient of friction. A reset flag indicates that the road surface coefficient of friction has not been identified.

If the throttle area is still being limited to limit engine torque output as a result of the operation of the throttle limit closing routine 52 in response to a prior excessive wheel slip condition and therefore not under the control of the vehicle operator, the throttle limit opening routine 51 increases the throttle area and therefore engine output torque at a controlled rate that is directly proportional to the road surface coefficient of friction identified during the throttle angle limit closing routine, that is, the controlled rate increases in value for increasing values of the road surface coefficient of friction. This feature provides for stability on low coefficient of friction road surfaces where a rapid torque application may lead to oscillation in spin control and provides high driving forces on high coefficient of friction surfaces.

An engine torque limiting condition is represented by a throttle area limit command T_{AC} that is greater than the actual throttle area T_{A} by a value K₁ 58. When this condition is sensed, the throttle area command is increased at a rate determined by the value of T_{OPEN} 60,62,64. With each execution of the traction control routine of Figure 3, a time t will be incremented 62 until it equals T_{OPEN} 60 after which t is reset and the throttle area limit command T_{AC} is increased by K₂ 64. In this manner, the throttle area limit command is increased at a rate that is determined by and that is inversely proportional to T_{OPEN}. As will be described, the value of T_{OPEN} is inversely proportional to the road surface coefficient of friction so that the throttle area limit command T_{AC} is increased at a rate that is directly proportional to the road surface coefficient of friction.

A throttle position command required to establish the throttle area equal to T_{AC} is determined via a lookup table and issued to the D/A 28 of Figure 1 66. The closed loop control circuit 26 then operates to position the throttle blade 20 to the commanded position. The result is that as T_{AC} is ramped, the engine torque output is ramped at a controlled rate that is dependent upon the road surface coefficient of friction.

When the throttle area limit command T_{AC} is or becomes larger that the actual throttle area T_{A} plus some small value K₁, the routine is no longer limiting throttle position and therefore engine torque and control has been returned to the vehicle operator. When this condition is sensed 58, the throttle area limit command T_{AC} is set to a maximum value to allow the operator to control the throttle unrestricted at all throttle angles and T_{OPEN} is set to a minimum value 68. The throttle position command corresponding to the maximum value of T_{AC} is determined and issued to the D/A 28 which established a condition allowing the operator to position the throttle blade 20 to wide open position 66.

When the vehicle speed is greater than S 53 and the wheel spin becomes greater than the low threshold 54 the throttle angle limit closing routine is executed to limit the engine torque output for wheel spin control. In general, the engine torque output is decreased at a rate that varies directly with the value of wheel slip and inversely with the road surface coefficient of friction. In other words, the rate of decrease in engine torque output increases with increasing values of wheel spin and increases with decreasing values of the road surface coefficient of friction. This provides a rapid response to spin on a low road surface coefficient of friction to maintain vehicle stability. First, it is determined if the road surface coefficient of friction has been identified as represented by a set condition of the flag that was initialized to a reset condition at step 54 70. In this embodiment, the road surface condition is measured by determining the rate of change in slip. This in turn is determined by the time lapse from wheel spin at the low threshold to wheel spin at a high threshold such as 10%. Assuming the road surface condition has not been identified and that wheel slip is below the high threshold 72 the counter previously initialized at step 84 is incremented to provide a measure of the time lapsed since wheel slip exceeded the low threshold 74.

The next series of steps establish the rate of decrease in the throttle area and therefore engine torque output to limit wheel spin. First, one factor T_{CLOSE} establishing the rate of engine torque reduction is established from a lookup table storing values of T_{CLOSE} that vary as a direct function of the value of T₁ 76. The stored values of T_{CLOSE} establish a direct functional relationship between T_{CLOSE} and T₁, that is, the retrieved values of T_{CLOSE} increase as T₁ increases. Recalling that T₁ was initialized to a maximum value at step 56, T_{CLOSE} is therefore set at this time to a maximum value which will remain constant until the road surface condition is identified.

Thereafter, the throttle area limit command T_{AC} is reduced at a rate determined by the value of T_{CLOSE} and the correction factor F_{C} determined at step 50 as a function of wheel spin 78,80,82. With each execution of the traction control routine of Figure 3, the time t will be incremented 80 until it equals T_{CLOSE} 78 after which t is reset and the throttle area limit command T_{AC} for controlling the throttle position 66 is set equal to a value less than the actual throttle area T_{A} by an amount established by the correction factor F_{C} 82. In this manner, the throttle area limit command T_{AC} is decreased at a rate determined by and inversely proportional to T_{CLOSE} and determined by and inversely proportional to the value of the correction factor F_{C}. Prior to the spin exceeding the upper spin threshold at which time the surface condition is identified, T_{CLOSE} is constant at a maximum value tending to establish a low rate of decrease in the throttle area limit command T_{AC} and therefore engine torque output. During this period the rate of decrease in the throttle area command T_{AC} is variable in inverse relationship to the correction factor F_{C} and thereby directly proportional to the wheel spin so that a higher rate of engine torque reduction is provided for higher wheel spin values.

When the wheel spin exceeds the upper limit, the count in the counter incremented at step 74 represents the rate of change in wheel spin and represents a measure of the road surface coefficient of friction. Specifically the count will be larger for lower rates of change in wheel spin corresponding to higher coefficient of friction values. When this condition is sensed 72, (A) the flag is set to indicate that the road surface condition has been identified, (B) T₁ is set to the value of the counter and therefore represents the road surface coefficient of friction, (C) T_{OPEN} is set to a value obtained from a lookup table storing values of T_{OPEN} that vary in a predetermined inverse relation to T₁ so that the rate of engine torque increase after wheel spin is reduced to below the low threshold as previously described is inversely proportional to the surface coefficient of friction and (D) spark advance is set to zero for additional torque reduction 84. Once the road surface condition has been identified, T_{CLOSE} is then set to a value from a lookup table as previously described that is directly proportional to T₁ 76. The effect of setting T_{CLOSE} in a direct relationship to T₁ is to vary the rate of decrease in the throttle area limit command via step 82 and therefore engine torque output via step 66 in an inverse relation to the surface coefficient of friction. In other words, the rate of engine torque reduction increases with decreasing values of the road surface coefficient of friction. When spin thereafter is controlled to below the low threshold 54 in response to the decreasing engine torque output, the throttle limit opening routine 51 is executed as previously described to increase the engine torque output at a rate established at step 84 that is directly proportional to the surface coefficient of friction.

In summary, the throttle limit closing routine 52 reduces the engine torque output at a rate directly proportional to wheel spin and further at a rate that is varied in inverse relationship to the road surface coefficient of friction. Following wheel spin recovery, the throttle limit opening routine 51 increases the engine torque output at a rate that is varied in direct relationship to the road surface coefficient of friction.

## Claims

1. A method of adaptively controlling spin of a driven wheel (12) of a motor vehicle having an engine (10) for applying driving torque to the driven wheel, the method being adaptable to varying surface conditions of a road surface over which the driven wheel is travelling, the method comprising the steps of: determining (18,50,70,72,74,84) wheel spin calculated from the difference between the speed of driven and undriven wheels ; determining (18,54) the value of a parameter related to the road surface coefficient of friction; sensing (18,84) an excessive spin condition of the driven wheel; and reducing (18,76-82,66) the driving torque applied to the driven wheel in response to a sensed excessive spin condition and at a rate having a predetermined inverse relationship to the determined value of said parameter related to the road surface coefficient of friction; characterised in that the value of the parameter related to the road surface coefficient of friction is determined by determining the rate of change of wheel spin by incrementing a counter to provide a measure of time lapse from wheel spin at a low threshold to wheel spin at a high threshold, and determining the rate of change of wheel spin from the measured time lapse.

2. A method as claimed in claim 1, further including the steps of determining recovery from the excessive spin condition and increasing the driving torque applied to the driven wheel (12) following a determined recovery at a rate having a predetermined direct relationship to the determined value of said parameter related to the road surface coefficient of friction.

3. A method as claimed in claim 2, wherein the step of determining the value of said parameter related to the road surface coefficient of friction includes the step of determining the rate of increase of the determined wheel spin at the time an excessive spin condition of the driven wheel (12) was sensed.

4. A method as claimed in claim 3, further including the step of adjusting the rate of reducing the driving torque applied to the driven wheel (12) by an amount having a predetermined direct relationship to the determined wheel spin.

5. A traction control apparatus for a motor vehicle having an engine (10) for applying driving torque to a driven wheel (12), the traction control apparatus being adaptable to varying surface conditions of a road surface over which the driven wheel is travelling, the traction control apparatus comprising, in combination, means (18,50,70-74,84) for determining wheel spin; means (18,54) for determining the rate of change in the determined wheel spin, the determined rate of change representing a measure of the road surface coefficient of friction; means (18,84) for sensing an excessive spin condition of the driven wheel; and means (18,76-82,66) for reducing the driving torque applied to the driven wheel in response to a sensed excessive spin condition and at a rate having a predetermined inverse relationship to the determined rate of change in wheel spin at the time an excessive spin condition was sensed, whereby the driving torque applied to the driven wheel is reduced to limit wheel spin in accordance with the road surface coefficient of friction; characterised in that the means for determining the rate of change in the determined wheel spin comprises means for incrementing a counter to provide a measure of time lapse from wheel spin at a low threshold to wheel spin at a high threshold, and means for determining the rate of change of wheel spin from the measured time lapse.

## Patentansprüche

1. Ein Verfahren zur sich anpassenden Regelung des Durchdrehens eines angetriebenen Rades (12) eines. Kraftfahrzeugs mit einem Motor (10) zum Anlegen von antreibendem Drehmoment an das angetriebene Rad, wobei das Verfahren an verschiedene Oberflächenzustände einer Straßenoberfläche anpaßungsfähig ist, über welche das angetriebene Rad fährt, und das Verfahren die Schritte umfaßt, daß: das Raddurchdrehen, das aus der Differenz zwischen der Geschwindigkeit der angetriebenen und nicht angetriebenen Räder berechnet wird, bestimmt wird (18, 50, 70, 72, 74, 84), der Wert eines Parameters bestimmt wird (18, 54), der auf den Straßenoberflächenreibungskoeffizienten bezogen ist; ein exzessiver Durchdrehzustand des angetriebenen Rades erfaßt wird (18, 84); und das antreibende Drehmoment, das an das angetriebene Rad angelegt wird, in Abhängigkeit zu einem erfaßten exzessiven Durchdrehzustand und mit einer Rate verringert wird (18, 76-82, 66), die eine vorbestimmte umgekehrte Beziehung zu dem bestimmten Wert des Parameters hat, der auf den Straßenoberflächenreibungskoeffizienten bezogen ist; dadurch gekennzeichnet, daß der Wert des Parameters, der auf den Straßenoberflächenreibungskoeffizienten bezogen ist, bestimmt wird, indem die Rate der Änderung des Raddurchdrehens bestimmt wird, indem ein Zähler inkrementiert wird, um ein Maß des Zeitverstreichens von dem Raddurchdrehen bei einer niedrigen Schwelle zum Raddurchdrehen bei einer hohen Schwelle zu schaffen, und die Rate der Änderung des Raddurchdrehens aus dem gemessenen Zeitverstreichen bestimmt wird.

2. Ein Verfahren nach Anspruch 1, das weiter die Schritte umfaßt, daß die Erholung aus dem exzessiven Durchdrehzustand bestimmt wird und das antreibende Drehmoment, das an das angetriebene Rad (12) angelegt wird, einer bestimmten Erholung folgend mit einer Rate erhöht wird, die eine bestimmte direkte Beziehung zu dem vorbestimmten Wert des Parameters hat, der auf den Straßenoberflächenreibungskoeffizienten bezogen ist.

3. Ein Verfahren nach Anspruch 2, worin der Schritt der Bestimmung des Wertes des Parameters, der auf den Straßenoberflächenreibungskoeffizienten bezogen ist, den Schritt umfaßt, daß die Rate der Erhöhung des bestimmten Raddurchdrehens zu der Zeit bestimmt wird, zu der ein exzessiver Durchdrehzustand des angetriebenen Rades (12) erfaßt wurde.

4. Ein Verfahren nach Anspruch 3, das weiter den Schritt umfaßt, daß die Rate der Verringerung des antreibenden Drehmomentes, das an das angetriebene Rad (12) angelegt wird, um einen Betrag mit einer vorbestimmten direkten Beziehung zu dem bestimmten Raddurchdrehen eingestellt wird.

5. Eine Traktionsregelvorrichtung für ein Kraftfahrzeug mit einem Motor (10) zum Anlegen von antreibendem Drehmoment an ein angetriebenes Rad (12), wobei die Traktionsregelvorrichtung an verschiedene Oberflächenzustände einer Straßenoberfläche über welche das angetriebene Rad fährt, anpaßungsfähig ist und die Traktionsregelvorrichtung in Kombination umfaßt: ein Mittel (18, 50, 70-74, 84) zur Bestimmung des Raddurchdrehens; ein Mittel (18, 54) zur Bestimmung der Rate der Änderung in dem bestimmten Raddurchdrehen, wobei die bestimmte Änderungsrate ein Maß des Straßenoberflächenreibungskoeffizienten darstellt; ein Mittel (18, 84) zum Erfassen eines exzessiven Durchdrehzustandes des angetriebenen Rades; und ein Mittel (18, 76-82, 66) zum Verringern des antreibenden Drehmomentes, das an das angetriebene Rad angelegt wird, und zwar in Abhängigkeit von einem erfaßten exzessiven Durchdrehzustand und mit einer Rate, die eine vorbestimmte umgekehrte Beziehung zu der vorbestimmten Rate der Änderung im Raddurchdrehen zu der Zeit hat, zu der ein exzessiver Durchdrehzustand erfaßt wurde, wodurch das antreibende Drehmoment, das an das angetriebene Rad angelegt wird, verringert wird, um das Raddurchdrehen in Übereinstimmung mit dem Straßenoberflächenreibungskoeffizienten zu begrenzen;, dadurch gekennzeichnet, daß das Mittel zur Bestimmung der Änderungsrate in dem bestimmten Raddurchdrehen ein Mittel zur Inkrementierung eines Zählers umfaßt, um ein Maß des Zeitverstreichens von dem Raddurchdrehen bei einer niedrigen Schwelle zum Raddurchdrehen bei einer hohen Schwelle zu schaffen und ein Mittel zur Bestimmung der Änderungsrate des Raddurchdrehens von dem gemessenen Zeitverstreichen.

## Revendications

1. Procédé de régulation adaptative du patinage d'une roue motrice (12) d'un véhicule à moteur comprenant un moteur (10) permettant d'appliquer un couple moteur à la roue motrice, le procédé étant adaptable à des conditions variables de surface de la surface d'une route sur laquelle la roue motrice se déplace, le procédé comprenant les opérations consistant : à déterminer (18, 50, 70, 72, 74, 84) le patinage de roue, calculé à partir de la différence entre les vitesses des roues motrices et des roues non motrices, à déterminer (18, 54) la valeur d'un paramètre lié au coefficient de frottement de la surface de la route, à détecter (18, 84) un état d'excès de patinage de la roue motrice et à réduire (18, 76-82, 66) le couple moteur appliqué à la roue motrice en réponse à un état détecté d'excès de patinage et à une vitesse présentant une relation inverse préfixée par rapport à la valeur déterminée du paramètre lié au coefficient de frottement de la surface de la route, caractérisé en ce que la valeur du paramètre lié au coefficient de frottement de la surface de la route est déterminée en déterminant la vitesse de variation du patinage de roue en incrémentant un compteur, de façon à fournir une mesure du temps écoulé du patinage de roue à un seuil de faible niveau à un patinage de roue à un seuil de niveau élevé, et en déterminant la vitesse de variation du patinage de roue à partir du temps écoulé mesuré.

2. Procédé suivant la revendication 1, comprenant en outre les opérations consistant à déterminer un retour de l'état d'excès de patinage à un état normal et à augmenter le couple moteur appliqué à la roue motrice (12) à la suite d'un retour déterminé à l'état normal, à une vitesse présentant une relation directe préfixée par rapport à la valeur déterminée du paramètre lié au coefficient de frottement de la surface de la route.

3. Procédé suivant la revendication 2, selon lequel l'opération de détermination de la valeur du paramètre lié au coefficient de frottement de la surface de la route comprend l'opération consistant à déterminer la vitesse d'augmentation du patinage de roue déterminé au moment où un état d'excès de patinage de la roue motrice (12) a été détecté.

4. Procédé suivant la revendication 3, comprenant en outre l'opération consistant à ajuster la vitesse de réduction du couple moteur appliqué à la roue motrice (12), d'une valeur présentant une relation directe préfixée par rapport au patinage de roue déterminé.

5. Dispositif de régulation de traction pour véhicule à moteur comprenant un moteur (10) permettant d'appliquer un couple moteur à une roue motrice (1₂), le dispositif de régulation de traction étant adaptable à des conditions variables de surface de la surface d'une route sur laquelle la roue motrice se déplace, le dispositif de régulation de traction comprenant, en combinaison, des moyens (18, 50, 70-74, 84) servant à déterminer le patinage de roue, des moyens (18, 54) servant à déterminer la vitesse de variation du patinage de roue déterminé, la vitesse de variation déterminée représentant une mesure du coefficient de frottement de la surface de la route, des moyens (18, 84) servant à détecter un état d'excès de patinage de la roue motrice et des moyens (18, 76-82, 66) servant à réduire le couple moteur appliqué à la roue motrice en réponse à un état détecté d'excès de patinage et à une vitesse présentant une relation inverse préfixée par rapport à la vitesse de variation déterminée du patinage de roue à l'instant où un état d'excès de patinage a été détecté, de sorte que le couple moteur appliqué à la roue motrice est réduit de façon à limiter le patinage de roue d'une manière conforme au coefficient de frottement de la surface de la route, caractérisé en ce que les moyens de détermination de la vitesse de variation se présentant dans le patinage de roue déterminé comprennent des moyens servant à incrémenter un compteur, de façon à fournir une mesure du temps écoulé d'un patinage de roue à un seuil de faible niveau à un patinage de roue à un seuil de niveau élevé, et des moyens servant à déterminer la vitesse de variation du patinage de roue à partir du temps écoulé mesuré.
